# EUROPEAN PATENT APPLICATION

(11) **EP 1 919 249 A1**
(43) Date of publication of application: **07.05.2008**
(21) Application number: 06022623.0
(22) Date of filing: 30.10.2006
(51) Int. Cl.: H04Q 11/00

(54) **Method and system for transmitting information from at least one peripheral communication unit to a central communication unit**

(71) Applicant: Nokia Siemens Networks GmbH & Co. KG, 81541 München (DE)
(72) Inventor: Hajduczenia, Marek, 4505-314 Fiaes (PT); Monteiro, Paulo, 3930-209 Llhavo (PT); Silva, Prof. Henrique, 3030-076 Coimbra (PT)

(57) **Abstract**

The invention describes a method, a communication system, a central communication unit (OLT) and a peripheral communication unit (ONU1, ..., ONUn) for transmitting information from at least one peripheral communication unit (ONU1, ..., ONUn) to a central communication unit (OLT). According to the method a maximum transmission slot size is transmitted to the at least one peripheral communication unit (ONU1, ..., ONUn). Furthermore, at least one transmission slot is requested by the at least one peripheral communication unit (ONU1, ..., ONUn), wherein the size of the at least one requested transmission slot is dependent on the maximum transmission slot size. The size of the at least one requested transmission slot may be determined in such a manner that the at least one requested transmission slot is filled entirely or almost entirely by at least a part of the information to be sent.

## Description

In a telecommunication network the so-called "access networks" connect business and residential subscribers to the central offices of service providers. The central offices, in turn, are connected to metropolitan area networks (MANs) or wide area networks (WANs). Access networks are also commonly referred to as the "last mile" or "first mile", where the latter term emphasizes their importance to the subscribers. In today's access networks, telephone companies deploy digital subscriber loop (xDSL) technologies and cable companies deploy cable modems.

Typically, the access networks consist of hybrid fiber coax (HFC) systems with an optical fiber based feeder network between central office and remote node and an electrical distribution network between remote node and subscribers. These access technologies are unable to provide enough bandwidth to current high-speed Gigabit Ethernet local area networks (LANs) and evolving services, e.g., distributed gaming or video on demand. Future first-mile solutions not only have to provide more bandwidth but also have to meet the cost-sensitivity constraints of access networks arising from the small number of cost sharing subscribers.

A "passive optical network" (PON) is a point-to-multipoint optical access network with no active elements in signal path from source to destination. Here all the transmissions are performed between an OLT (optical line terminal) and several ONUs (optical network units). The OLT resides in the central office of network service providers and connect the optical access network to the metropolitan area network (MAN) or wide area network (WAN), also referred to as "backbone" of the telecommunication network.

On the other hand the ONUs are located at the end user locations and provide broadband video, data and voice services. Passive optical networks (PONs) address the last mile of communication infrastructure between the service provider's central office (CO), head end or point of presence (PoP) and business or residential customer locations. Data, voice and video must be offered over the same high-speed connection with guarantees of Quality-of-Service (QoS) and the ability to purchase bandwidth as on need basis.

Ethernet PONs (EPONs) have gained a great amount of interest both in industry and academia as a promising cost-effective solution of next-generation broadband access networks. EPONs carry data encapsulated in Ethernet frames, which makes it easy to carry IP packets and eases the interoperability with installed Ethernet LANs. EPONs represent the convergence of low-cost Ethernet equipment (switches, network interface cards (NICs)) and low-cost fiber architectures. Furthermore, given the fact that most of today's data traffic originates from and terminates in Ethernet LANs, EPONs appear to be a natural candidate for future first-mile solutions. The main standardization body behind EPON is the IEEE 802.3ah Task Force. This task force is developing the so-called multipoint control protocol (MPCP) which arbitrates the channel access among central office and subscribers. MPCP is used for dynamically assigning the upstream bandwidth (subscriber-to-service provider), which is the key challenge in the access protocol design for EPONs.

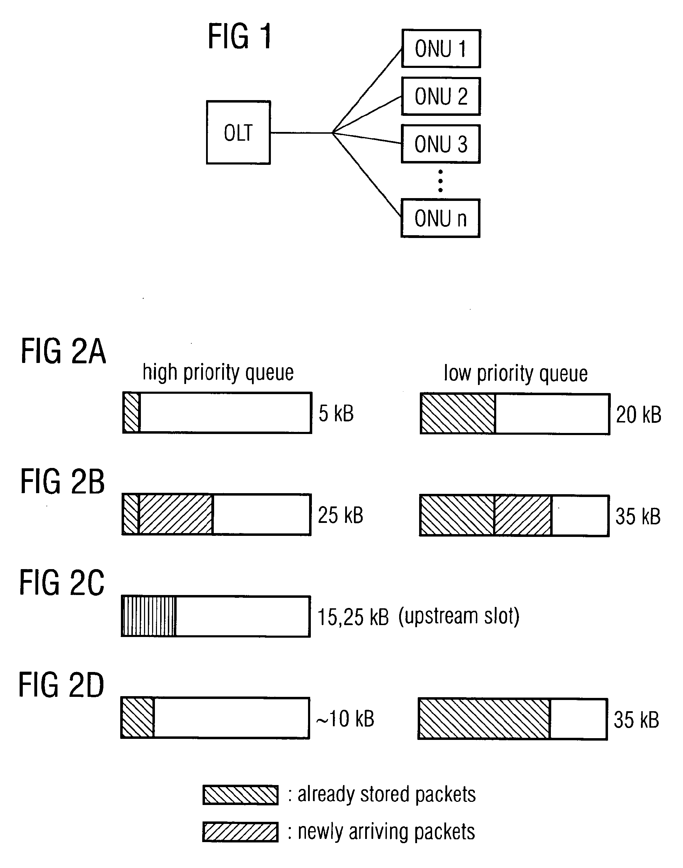

Typically, PONs have a physical tree topology with the central office located at the root and the subscribers connected to the leaf nodes of the tree (see Fig. 1). At the root of the tree is the optical line terminal (OLT) which is the service provider equipment residing at the central office. The PON connects the OLT to multiple optical network units (ONU) (the customer premise equipment) through a 1 : N optical splitter/combiner. An ONU can serve a single residential or business subscriber, referred to as fiber-to-the-home/business (FTTH/B), or multiple subscribers, referred to as fiber-to-the-curb (FTTC). Each ONU buffers data received from the attached subscriber(s). In general, the round-trip time (RTT) between OLT and each ONU is different. Due to the directional properties of the optical splitter/combiner the OLT is able to broadcast data to all ONUs in the downstream direction. In the upstream direction, however, the ONUs cannot communicate directly with one another. Instead, each ONU is able to send data only to the OLT. Thus, in the downstream direction a PON may be viewed as a point-to-multipoint network and in the upstream direction, a PON may be viewed as a multipoint-to-point network. Due to this fact, the original Ethernet media access control (MAC) protocol does not operate properly since it relies on a broadcast medium.

An EPON is a point-to-multipoint (P2M) network with a single central office (CO) providing services to a number of residential/business customers. All transmissions in the EPON system are performed between the OLT and the ONUs, where the OLT is typically a blade in a CO chassis while the ONUs are more commonly deployed as stand-alone boxes. In an EPON ONUs typically aggregate traffic streams from individual subscribers and prepare them for transmission towards the OLT. ONUs additionally employ packet-prioritization mechanisms or scheduling, enabling full QoS (Quality of Service) support and enforcement of Service Level Agreements (SLAs) between the Internet Service Provider (ISP) and the end subscribers.

In the downstream direction, Ethernet packets broadcast by the OLT pass through a 1xN Passive Splitter Combiner (PSC) or a PSC cascade to reach the ONUs. Each ONU receives a copy of every downstream data packet. The number of connected ONUs can vary typically between 4 and 64, limited by the available optical power budget. The downstream channel properties in this PON system make it a shared-medium network: packets broadcast by the OLT are selectively extracted by each destination ONU, which applies simple packet-filtering rules based on MAC and LLID ("logical link identifier") addresses. In other words, in the downstream channel operation packets destined to different end subscribers are filtered out by the ONUs from the broadcast downstream data flow.

In the upstream direction (from the ONUs towards the OLT) the EPON operates in the multipoint-to-point (M2P) mode, with all connected and active ONUs transmitting their data packets to a single receiver module located in the OLT. Moreover, since each ONU is not aware of the other ONUs' transmissions (as the PSC is a directional device, an ONU cannot see the signal transmitted upstream by any other ONU), the resulting connectivity is comparable to a P2P (peer-to-peer) architecture, where centrally managed access to the upstream channel allows for only a single ONU at a time to deliver pending packets. However, since all ONUs belong to a single collision domain, centrally managed channel access is required (typically via a Dynamic Bandwidth Allocation algorithm, DBA for short), and ONUs in their default state are not allowed to transmit any data unless granted specifically by the OLT. In this way, data collisions are avoided, since the central OLT controller at any and every moment of time is aware of the scheduled transmissions from individual ONUs. The only exception from this centrally managed upstream channel access scheme is the so-called "Discovery Process", where new and not initialized ONUs are allowed to register in the EPON system.

A multiple access protocol is required in the upstream direction, since the EPON operates as a multipoint-to-point network and every single ONU talks directly to the OLT. A contention-based media access is difficult to implement, since in the typical network deployment ONUs cannot detect a collision at the OLT, and providing the architecture with a feedback loop leading to every single ONU is not economically feasible. Contention-based schemes have the drawback of providing a non-deterministic service, i.e. node throughput and channel utilization may be described as statistical averages, and hence there is no guarantee of an ONU getting access to the media in any small interval of time, which means that this type of access protocol is ill-suited for delay-sensitive transmissions, such as video conferencing or VoIP.

In current EPON systems problems occur when the given EPON network is subject to heavy offered load conditions. In cases like this it may happen that, for example, a part of the upstream channel remains unused.

The present invention is therefore directed to mitigate the above mentioned problems and especially to increase the channel capacity in EPONs. The object of the invention is achieved in the features of claim 1, 6, 8 and 9.

According to the invention a method is provided for transmitting information from at least one peripheral communication unit to a central communication unit in a network system. The method comprises the steps of transmitting a maximum transmission slot size to the at least one peripheral communication unit and requesting at least one transmission slot by the at least one peripheral communication unit, wherein the size of the at least one requested transmission slot is dependent on the maximum transmission slot size.

One of the advantages of the invention is that the upstream channel capacity in the network system is increased.

In one embodiment of the invention the maximum transmission slot size is determined and/or transmitted to the at least one peripheral unit by the central communication unit - claim 2. The size of the at least one requested transmission slot may be determined by the at least one peripheral communication unit - claim 3. Advantageously, the maximum transmission slot size can thus be considered when the size of the requested transmission slot is determined.

In a further embodiment the size of the at least one requested transmission slot is determined in such a manner that the at least one requested transmission slot is filled entirely or almost entirely by at least a part of the information to be sent - claim 5. In this case the upstream channel of the network system can advantageously be used completely with no remainders left in the transmission slot.

Further advantageous embodiments of the method according to the invention including a network system, a central communication unit and a peripheral communication unit will emerge from the further claims.

The method according to the invention is explained in more detail below with references to several drawings, in which:
Fig. 1 shows an exemplary construction of a PON system.
Fig. 2 shows an example of the queues in an ONU with two packet queues under heavy load conditions,
Fig. 3 shows an example of the generic organization of an OCM array with xLLIDs and varied numbers of queues assigned to each LLID,
Fig. 4 shows a flow chart for an extended OLT functionality inside of the discovery process data flow when a new ONU is registered,
Fig. 5 shows a flow chart for an extended OLT functionality inside of the discovery process data flow when an ONU has been deregistered,
Fig. 6 shows a flow chart for an extended OLT functionality inside of a REPORT MPCP DU processing data flow,
Fig. 7 is a table showing the GATE MPCP DU numbers of grants/flags field,
Fig. 8 shows the principle of the GATE MPCP DU internal structure, as described in detail in IEEE 802.3, clause 64,
Fig. 9 is a table showing the eGATE MPCP DU numbers of grants/flags field, and
Fig. 10 shows the principle of the eGATE MPCP DU internal structure, as described in detail in EP 05024740.2.

The following is an exemplary description of the above-mentioned problem and the inventive method. In this example an ONU, and the given EPON network in general, are subject to heavy offered load conditions. If the amount of traffic generated by subscribers exceeds for instance the upstream channel capacity, the ONUs are forced to store their packets and delay the upstream delivery for a few polling cycles. Since all ONUs in the system are bound by the QoS enforcing mechanism operating at the central OLT controller and limiting the size of a single upstream channel slot, the available upstream channel bandwidth will be shared fairly between individual ONUs.

In the example shown in Fig. 2 it is assumed that the given ONU houses two individual packet queues (high and low priority ones). Notice, however, that the following considerations can easily be extended into any number of packet queues supported by the ONU module.

As far as the EPON structure parameters are concerned, it is assumed that there are in total 16 individual ONUs with a single LLID per ONU, and the selected service policy is a limited one. The polling cycle length is defined at 2 ms, producing the upstream transmission slot size of 15.26 kB per ONU per cycle. This means that, regardless of the actual bandwidth demand under heavy load conditions which can easily exceed the aforementioned value, the OLT under this particular service policy will be able to grant at most 15.26 kB per ONU per cycle.

It is further assumed that, at a certain moment of time (the current polling cycle), an ONU is subject to heavy offered load conditions and the queues already contain a number of packets, occupying in total 25 kB of the buffer space (5 kB in the high priority queue and 20 kB in the low priority queue - see (a) in Fig. 2). These packets were previously reported using a "REPORT MPCP DU" message to the central OLT controller. During the next polling cycle, subscribers deliver additional 35 kB (20 kB of high priority data and 15 kB of low priority data) of data and, providing that the ONU buffer space is sufficient (for example standard values are around 250 - 500 kB), it is stored and amounts to 60 kB of data pending transmission in the upstream channel ((b) in Fig. 2). Following the earlier assumption about the number of ONUs and the maximum size of a single upstream transmission slot, which can be assigned to a single ONU per cycle, each ONU can be served with at most a 15.26 kB transmission slot, regardless of the actual bandwidth demand ((c) in Fig. 2). In other words, the previously reported bandwidth demand (25 kB) is ignored and the maximum acceptable upstream transmission slot size is allocated, in accordance with the number of active ONUs, service policy, and polling cycle length. That means that only 15.26 kB out of pending 60 kB will be delivered upstream, even though the ONU under consideration reported a bandwidth demand of 25 kB ((d) in Fig. 2).

The ONU based packet scheduler will have to take care of selecting a packet population to be delivered upstream within the said granted transmission slot (15.26 kB), and a strict priority oriented packet scheduling, typically employed in EPON ONUs, results in packet preemption and slot remainders.

Since the reported and granted upstream transmission slot sizes are different and newly arrived packets may have higher priority than some packets already stored in the queue (as happens in the exemplary description), these packets will be transmitted in the next transmission slot before the lower-priority packets due to operation of the strict priority oriented packet scheduler. Since these newly arrived packets were not reported to the OLT and will be transmitted in the slot, the given slot cannot accommodate all the stored packets, thus causing some lower-priority packets to be left in the queue and changing the delineation bounds of the packet population. Since Ethernet packets cannot be fragmented (according to IEEE 802.3 standard definitions), packet preemption results in an unused slot remainder (unless an added higher-priority packet is the same size as a preempted lower-priority packet, which is highly unlikely, providing that more than 1 packet is preempted). The average size of the slot remainder per polling cycle is roughly estimated at 500 bytes and depends on the actual Packet Size Distribution (PSD) observed in the given network. However, 500 bytes lost every 15.26 kB mean that roughly 3% of upstream channel bandwidth remains unused.

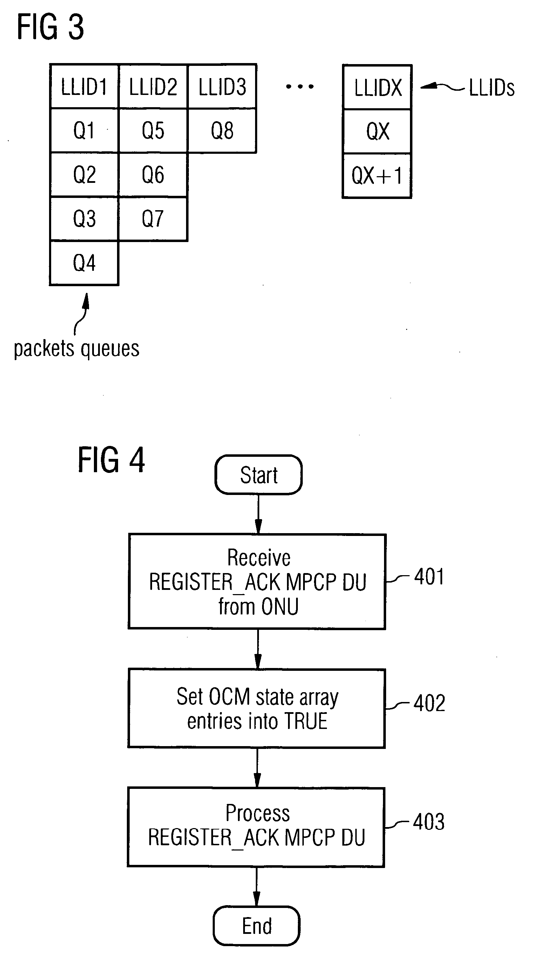

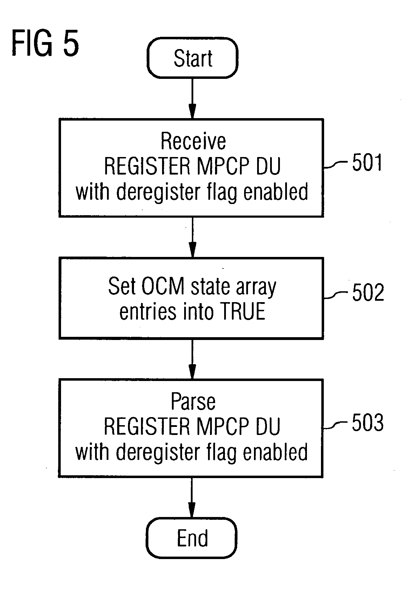

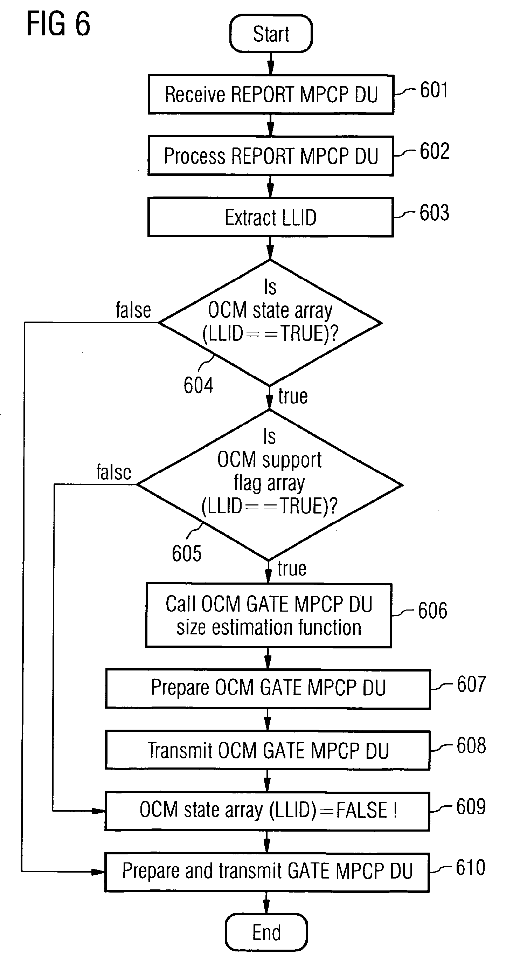

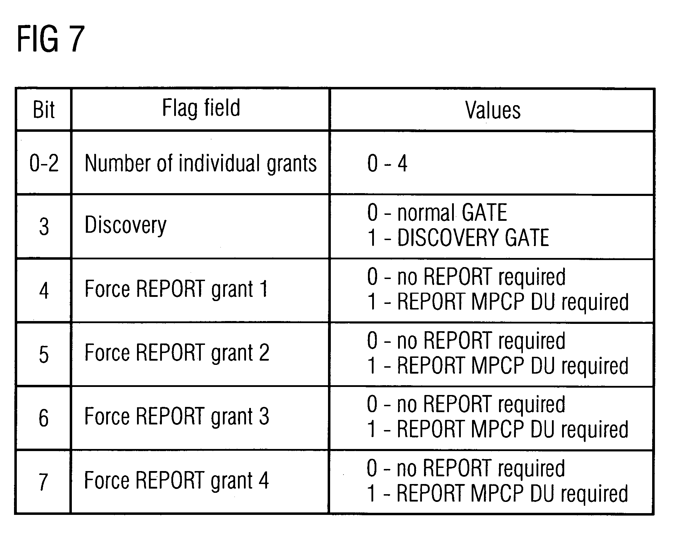

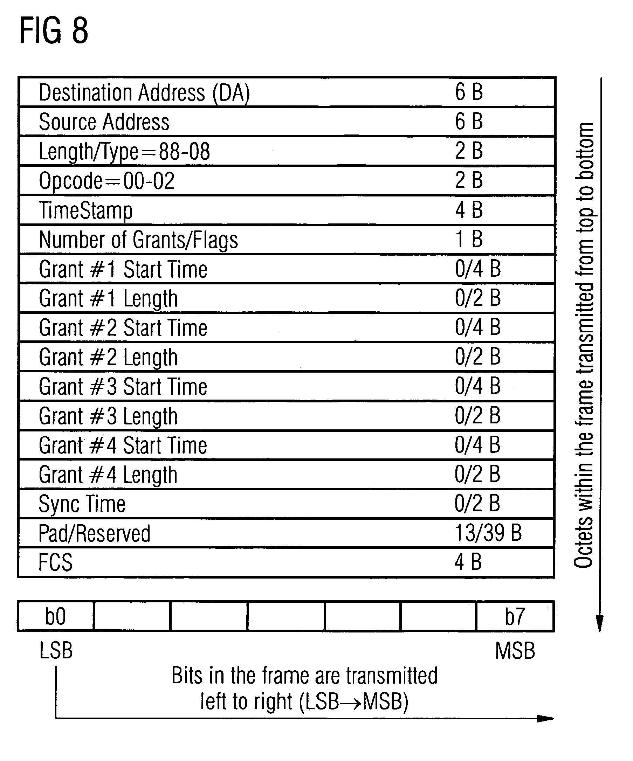

The above described problem is therefore a direct result of:
- heavy load conditions, where subscribers deliver more data than the given ONU can transmit upstream,
- strict priority oriented packet schedulers in ONUs, which operate on a single aggregated upstream transmission slot and must allocate bandwidth to all packet queues,
- strict limitation of the upstream transmission slot size by the central OLT controller, while the ONU side is not directly aware of such a limitation, and
- lack of information about the reportable queue size at the ONU side, where each ONU reports the current queue state, delivering detailed information on the current queue state to the OLT, while only an aggregate upstream transmission slot is granted to the ONU by the OLT.
   One of the possible ways of mitigating the occurrence of slot remainders under heavy network load conditions is to make sure that the ONU does not report more bandwidth demand that the OLT can grant in a single transmission slot. On the other hand, since the number of active ONUs (and actually LLIDs) in the system changes frequently (because active ONUs can be switched off and new ones can register), the maximum size of the upstream transmission slot changes dynamically and it is impossible to have a-priori knowledge of its value at the ONU side. It is therefore obvious that the OLT must announce the maximum reportable queue size to all ONUs upon any changes in the number of active ONUs/LLIDs in the system.
   To implement the method according to the invention some functionality changes are required in the ONU module. Standard ONU functionality as well as all IEEE 802.3 compliant standard state machines are maintained and only extended to support the inventive "Overflow Control Mechanism" (OCM). Major extensions in the ONU functionality include the following features.
- An OCM support flag array, which is complementary of its counterpart on the OLT side. The OCM support flag stores Boolean flags indicating weather a given LLID operating in a particular ONU supports the OCM. Depending on this particular setting, a given LLID will either accept or ignore an "OCM GATE MPCP DU" message, once properly received and recognized.
- An OCM array, storing integer values expressed in Time Quanta unit (TQ, defined at 16 bit times for 1 Gbit/s effective data rate in EPON systems, in accordance with the IEEE 802.3 ah standard). The OCM array describes the maximum reportable queue size(s) for a given LLID. Since a single LLID might be assigned more than one packet queue and extended flow control "MPCP DUs" allow for intra LLID queue addressing, said array must be organized in the form of a two-dimensional storage field with variable row/column size, depending on the organization (see Fig. 3).
- An "OCM GATE MPCP DU" receive function, responsible for filtering "OCM MPCP DUs" messages from other general function "GATE MPCP DUs". In order to assure compatibility with both standard and extended "GATE MPCP DUs", the function shall be placed as the first filtering function, thereby preventing an "OCM GATE MPCP DU" from being treated as a standard "GATE MPCP DU".
- And an "OCM GATE MPCP DU" parse function, responsible for parsing either standard or extended "OCM GATE MPCP DU" messages and storing the recovered maximum queue size(s) in the OCM array. This particular function is therefore responsible for proper delineation of the given "OCM GATE MPCP DU", identification of the current LLID and modification of the entries in the OCM array, depending on the number of queues supported by the given LLID under consideration. Depending on the type of parsed "GATE MPCP DU", there are two types of functionalities:
   (i) Providing that a standard "OCM GATE MPCP DU" message is parsed, the unique valid entry in the "MPCP DU" will be parsed, decoded and inserted into the proper column of the OCM array, which in this case should contain only one entry. In the case of standard "GATE MPCP DU" systems, the ONU packet manager is responsible for distributing bandwidth to individual queues, and thus the OLT OCM instance must deliver only one aggregate maximum reportable queue size per LLID. It is LLID's responsibility to use the maximum reportable queue size to service all associated packet queues. The OLT is unaware of this functionality and treats all LLIDs in the system as if they were associated with only a single packet queue.
   (ii) Providing that an extended "OCM GATE MPCP DU" is parsed, a number of entries will be parsed, decoded and inserted into the proper column of the OCM array, observing the proper row number for subsequent queues associated with the given LLID. During the parsing process, the "OCM GATE MPCP DU" parse function shall compare the number of queue grants relayed in the extended "GATE MPCP DU" with the number of queues associated with the given LLID in the OCM array. Providing that both values match, the entries for individual queues shall be copied from the "OCM GATE MPCP DU" into the OCM array.
   According to the invention there are changes of the functionality in the OLT module necessary, too. Standard OLT functionality, as well as all IEEE 802.3 compliant standard state machines, are maintained and only extended to support OCM. Major extensions in the OLT functionality include the following features.
- An "OCM state array" which stores Boolean flags indicating whether a given LLID is to be issued an "OCM GATE MPCP DU" (either standard or extended) after reception of the next "REPORT MPCP DU" message (either standard or extended).
- An "OCM support flag array" which stores Boolean flags indicating whether a given LLID supports OCM at all. The legacy LLIDs which are not prepared to parse and make proper use of the "OCM GATE MPCP DU" messages (either standard or extended) shall be excluded from the OCM.
- An "OCM GATE size estimation function" that is responsible for an estimation of the current maximum reportable queue size, which is later on inserted into the proper "OCM GATE MPCP DU" message (either standard or extended). Since standard and extended "GATE MPCP DUs" have different internal structure and different number of queues, the function shall recognize the type of prepared "MPCP DU" and act accordingly.
- An "OCM GATE preparation function" that is responsible for preparation of the appropriate "GATE MPCP DU" message (either standard or extended, depending on the type of received "REPORT MPCP DU" message) based on the estimated internal queue size(s), as returned by the OCM GATE size estimation function. Apart from creation of a properly shaped "GATE MPCP DU" message this function is also responsible for setting proper signaling as defined above.
- An "OCM GATE transmission function" that is responsible for downstream transmission of a prepared "OCM GATE MPCP DU" message (either standard or extended). The function responsibilities include communication with the downstream channel scheduling agent to allocate a downstream transmission slot, delivery of the properly formed "GATE MPCP DU" to the output buffer and reset of the appropriate entry in the OCM state array assigned to the currently serviced LLID.
   During the Discovery Process, as indicated in Fig. 4, once a new "REGISTER_ACK MPCP DU" message is received and properly decoded (step 401), a new LLID is registered in the system and, according to the initial system assumptions, the maximum reportable queue size boundaries must be changed. This requires transmitting an "OCM GATE MPCP DU" message to all active LLIDs in the system, and thus all the entries in the OCM state array are set to TRUE (step 402), indicating that once the next "REPORT MPCP DU" message is received from the given LLID, an "OCM GATE MPCP DU" will be delivered to the said entity, as indicated in Fig. 6. Subsequently, the received "REGISTER_ACK MPCP DU" message is processed (step 403).
   The same functionality (see Fig. 5) is also required when one or more LLIDs are deregistered from the network (i.e. when a "REGISTER MPCP DU" message with the deregister flag enabled is received - step 501), by either an ONU or an OLT request. Again, since the number of active LLIDs in the system changes, the maximum reportable queue size boundaries should be changed as well, resulting in a setting of all the entries in the OCM state array to a "TRUE" state (step 502) and then to a delivery of corresponding "OCM GATE MPCP DUs". The "REGISTER MPCP DU" message (with the deregister flag enabled) is parsed as is well known (step 503).
   It is now referred to Fig. 6. Once a "REPORT MPCP DU" is received at the OLT level (step 601), the message is parsed and processed (step 602), and then the LLID of the source ONU is extracted (step 603). Once the LLID is known, the OCM state array is checked (step 604) to see whether the given LLID should have the "OCM GATE MPCP DU" produced or not, indicating that the LLID under consideration needs an update of the maximum reportable queue size, triggered by a change in the number of active LLIDs in the system. Assuming that no changes are necessary (i.e. the appropriate entry in the OCM state array contains "FALSE"), the standard work flow is maintained, i.e. a standard "GATE MPCP DU" message is produced and transmitted (step 610).
   Assuming that the given LLID must have the "OCM GATE MPCP DU" message issued (i.e. the query (LLID==TRUE) is "true" in step 604), the system checks whether the given LLID supports OCM at all (step 605). If not (i.e. if the OCM support flag array for the LLID is disabled), the OCM state array entry for the given LLID is set to "FALSE" (step 609) and the standard work flow is continued (step 610). Otherwise, the "OCM GATE MPCP DU" message is prepared by estimating the size of the individual reportable queue sizes (step 606). The MPCP DU itself is prepared (step 607) and then transmitted (step 608) downstream by allocating a transmission slot and physically delivering the message to the output buffer. Once completed, the OCM state array entry for the given LLID is set to "FALSE" (step 609) and the standard work flow is continued. This means, the "GATE MPCP DU" message is prepared and transmitted (step 610).
   Standard flow control "MPCP DUs" are standardized in the scope of IEEE 802.3 ah, clause 64. As an example it is proposed an extended functionality of the "GATE MPCP DU" message which makes part of the OCM for Ethernet Passive Optical Networks.
   It is now referred to Fig. 7 and Fig. 8. The number of grants/flags field is already full and does not have any reserved bits to be reused for signalling OCM operation, thus another approach must be adopted. Therefore the characterization of the "OCM GATE MPCP DU" message can be defined for instance as follows.
- The number of grants in the number of grants/flags field must contain the value of 4 (bits 0 to 2 are set to value 001), since the "OCM GATE MPCP DU" can only contain one valid data slot (number 4), while slots 1 to 3 contain 0xFF sequences to assure that the given "GATE MPCP DU" is properly distinguished from the standard GATE MPCP DUs.
- All "REPORT" request fields are to be set to 0, indicating that no "REPORT MPCP DU" message is to be transmitted at the end of the transmission slot (bits 4 to 7 set to 0000).
- The discovery process indication bit is to be set to 0, since the "OCM GATE MPCP DU" cannot initiate the discovery process on the ONU side (bit 3 set to 0).
- And the "Grant # 1 Start Time", "Grant # 2 Start Time", "Grant # 3 Start Time" "and Grant # 4 Start Time" fields shall contain the value of 0xFFFFFFFF to indicate that these values are to be ignored on reception. Simultaneously, the "Grant # 1 Length", "Grant # 2 Length" and "Grant # 3 Length" fields shall contain the value of 0xFFFF to indicate that these values are to be ignored on reception while the "Grant # 4 Length" field contains the maximum reportable queue size.

Upon reception, the "OCM GATE MPCP DU" message should be identified during the "MPCP DU" parsing process, before standard "GATE MPCP DU", otherwise the "OCM GATE MPCP DU" message will be treated as a standard "GATE MPCP DU".

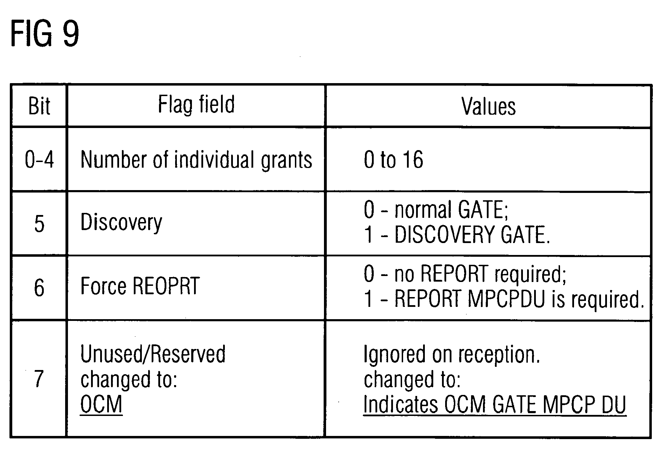

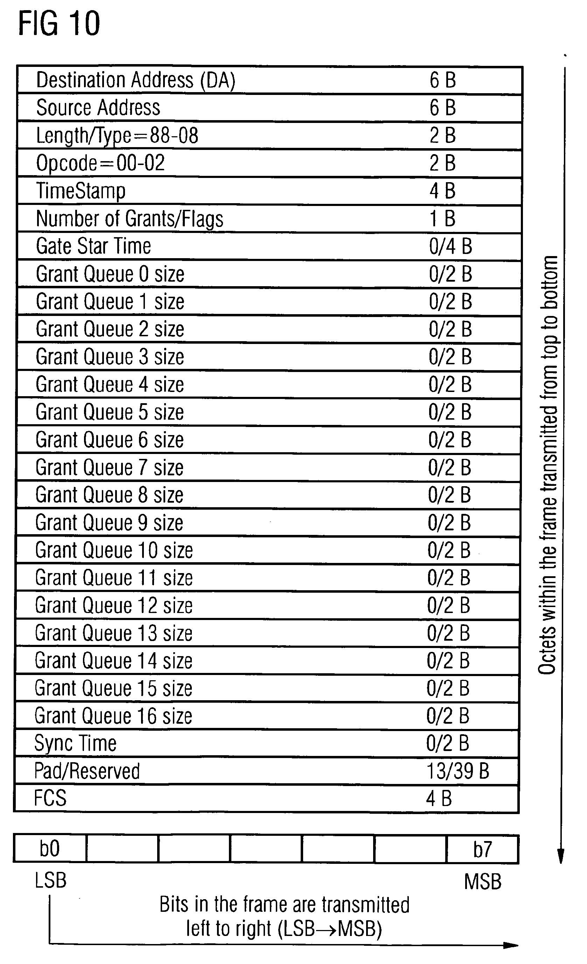

It is remarked that the OCM may also be implemented with network systems using the so-called "extended flow control MPCP DUs" disclosed in the European Patent Application EP 05024740.2. An "extended GATE MPCP DU" message ("eGATE MPCP DU") maintains its internal structure (see Fig. 9 and Fig. 10) with inherently required modifications introduced only in the number of grants/flags field.

Originally, only 7 bits of this field are assigned a functionality (bits number 0 to 7), as depicted in the table shown in Fig. 9, and thus it is hereby proposed to use the remaining bit number 7 to mark an OCM eGATE MPCP DU, which will be parsed at the ONU in a manner different from the standard/discovery GATE MPCP DUs. The proposed changes in the Number of grants/Flags field are indicated in Fig. 9 using underlined and bold comments.

OCM eGATE MPCP DU will be therefore marked in the following way:
- bit number 7 will be set to 1, indicating that the particular eGATE MPCP DU conveys information for the OCM,
- bit number 6 will be set to 0, indicating that the particular eGATE MPCP DU does not require transmission of the complimentary eREPORT MPCP DU,
- bit number 5 will be set to 0, indicating that the particular eGATE MPCP DU is not a discovery GATE,
- bits 0 to 4 will contain the encoded number of conveyed grants for individual queues.

Apart from the number of grants/flags field signalling, the meaning of individual Grant Queue N Size fields also changes. In a standard eGATE MPCP DU each such field represents the amount of upstream transmission bandwidth allocated for a particular queue supported by the given LLID, thus determining how many bytes may be delivered in the associated time slot. However, in the case of the OCM, there is no upstream transmission from the given LLID, and the OLT only notifies the LLID about the maximum reportable queue size, which will be used during the next reporting process. Therefore, individual Grant Queue N Size fields shall be parsed and associated with the particular packet queues, replacing previously stored maximum reportable queue sizes. It is also hereby assumed that the ONU has the capability to store and manage a reportable queue size array, as defined above. Additionally, since no upstream transmission is carried out, the Gate Start Time field shall contain the value of 0xFFFFFFFF, to indicate that its value is to be ignored on reception.

## Claims

1. A method for transmitting information from at least one peripheral communication unit (ONU1, ..., ONUn) to a central communication unit (OLT) in a network system, comprising the steps of:
- transmitting a maximum transmission slot size to the at least one peripheral communication unit (ONU1, ..., ONUn), and
- requesting at least one transmission slot by the at least one peripheral communication unit (ONU1, ..., ONUn), wherein the size of the at least one requested transmission slot is dependent on the maximum transmission slot size.

2. A method according to claim 1,
**characterized in**
**that** the maximum transmission slot size is determined and/or transmitted to the at least one peripheral unit (ONU1, ..., ONUn) by the central communication unit (OLT).

3. A method according to claim 1 or 2,
**characterized in**
**that** the size of the at least one requested transmission slot is determined by the at least one peripheral communication unit (ONU1, ..., ONUn).

4. A method according to one of the preceding claims,
**characterized in**
**that** the size of the at least one requested transmission slot is dependent on the amount of information to be sent.

5. A method according to one of the preceding claims,
**characterized in**
**that** the size of the at least one requested transmission slot is determined in such a manner that the at least one requested transmission slot is filled entirely or almost entirely by at least a part of the information to be sent.

6. A communication system for transmitting information from at least one peripheral communication unit (ONU1, ..., ONUn) to a central communication unit (OLT) in a network system comprising
- means for transmitting a maximum transmission slot size to the at least one peripheral communication unit (ONU1, ..., ONUn), and
- means for requesting at least one transmission slot, wherein the size of the at least one requested transmission slot is dependent on the maximum transmission slot size.

7. A communication system according to claim 6,
**characterised in**
**that** means are provided for determining the size of the at least one requested transmission slot depending on the maximum transmission slot size.

8. A central communication unit (OLT) for use in a communication system according to claims 6 or 7,
**characterised in**
**that** means are provided for transmitting a maximum transmission slot size to the at least one peripheral communication unit (ONU1, ..., ONUn).

9. A peripheral communication unit for use in a communication system according to claims 6 or 7,
**characterised in**
**that** means are provided for requesting at least one transmission slot, wherein the size of the at least one requested transmission slot is dependent on the maximum transmission slot size.

10. A peripheral communication unit according to claim 9,
**characterised in**
**that** means are provided for determining the size of the at least one requested transmission slot depending on the maximum transmission slot size.
